# EUROPEAN PATENT SPECIFICATION

(11) **EP 2 965 456 B1**
(45) Date of publication and mention of the grant of the patent: **15.05.2019**
(21) Application number: 13712398.0
(22) Date of filing: 04.03.2013
(51) Int. Cl.: H04W 72/04, H04W 74/08, H04W 84/04, H04L 1/18

(54) **SYNCHRONIZED PHYSICAL LAYER RECONFIGURATION AMONG USER EQUIPMENT, MACROCELL, AND SMALL CELL IN MACROCELL-ASSISTED SMALL CELL DEPLOYMENTS**
SYNCHRONISIERTE PHYSIKALISCHE SCHICHT-REKONFIGURATION ZWISCHEN EINER BENUTZERVORRICHTUNG, MAKROZELLE UND KLEINER ZELLE BEI MAKROZELLENUNTERSTÜTZTEM KLEINZELLIGEM EINSATZ
RECONFIGURATION DE COUCHE PHYSIQUE SYNCHRONISÉE ENTRE UN ÉQUIPEMENT D'UTILISATEUR, UNE MACRO CELLULE, ET UNE PETITE CELLULE, DANS DES DÉPLOIEMENTS DE PETITES CELLULES ASSISTÉS PAR UNE MACRO CELLULE

(43) Date of publication of application: 13.01.2016
(73) Proprietor: Nokia Technologies Oy, 02610 Espoo (FI)
(72) Inventor: ROSA, Claudio, DK-8920 Randers (DK); DALSGAARD, Lars, FIN-90230 Oulu (FI); SORRI, Antti, FIN-00620 Helsinki (FI)
(74) Representative: Ruuskanen, Juha-Pekka
(86) International application number: PCT/US2013/028793
(87) International publication number: WO 2014/137310

(56) References cited:
- EP-A2- 2 230 875
- WO-A1-2012/112577
- WO-A1-2012/136269
- US-A1- 2012 044 812
- NTT DOCOMO ET AL: "Necessity of C-plane architecture enhancements for dual connectivity", 3GPP DRAFT; R2-130488_NECESSITY FOR C-PLANE ARCHITECTURE ENHANCEMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. St. Julian; 20130128 - 20130201 18 January 2013 (2013-01-18), XP050668107, Retrieved from the Internet: URL:http://www.3gpp.org/ftp/tsg_ran/WG2_RL 2/TSGR2_81/Docs/ [retrieved on 2013-01-18]
- QUALCOMM INCORPORATED: "Air interface considerations for dual connectivity", 3GPP DRAFT; R2-130266 SMALL CELL AIR INTERFACE CONSIDERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 18 January 2013 (2013-01-18), XP050668046, Retrieved from the Internet: URL:http://www.3gpp.org/ftp/tsg_ran/WG2_RL 2/TSGR2_81/Docs/ [retrieved on 2013-01-18]
- HUAWEI ET AL: "Feasible scenarios and benefits of dual connectivity in small cell deployment", 3GPP DRAFT; R2-130225, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian; 20130128 - 20130201 19 January 2013 (2013-01-19), XP050668294, Retrieved from the Internet: URL:http://www.3gpp.org/ftp/tsg_ran/WG2_RL 2/TSGR2_81/Docs/ [retrieved on 2013-01-19]

## Description

### BACKGROUND:

### Field:

Certain embodiments relate to reconfiguration in communication networks. More specifically, certain embodiments relate to inter-site carrier aggregation (CA), and more generally to macrocell-assisted local area access for small cell enhancements.

### Description of the Related Art:

In order to support independent layer 1/layer 2 (L1/L2) Radio Resource Management (RRM) at macro and small cell (assuming backhaul connection with relaxed requirements between macrocell and small cell), the User Equipment (UE) may need to provide independent uplink feedback information (HARQ ACK/NACK, CSI) towards macro and small cell. For terminals only supporting transmission on one carrier frequency at a time, that is, no Uplink CA supported, the UE may need to periodically switch (based on a network configured Time Domain Multiplexing (TDM) switching pattern) the Uplink (UL) transmission frequency in order to separately provide Uplink Control Information (UCI) towards macro and small cell.

Besides representing a burden for UE implementation, such periodic switching may present the following disadvantages: at least one UL subframe cannot conventionally be used for UL data transmission every time the UE needs to switch UL frequency, and switching the UL frequency from small cell to macrocell carrier (and vice versa), in order to potentially transmit UCI, may cause a lower throughput experienced during the corresponding subframes, considering the UE typically experiences the highest UL throughput on either the small cell carrier or on the macrocell carrier.

This may result in UL performance degradation compared to the case where the UE always stays connected to the cell that guarantees best UL throughput. This is particularly harmful if in DL there is no data to be delivered via both small cell and macrocell.

In one possible example the UE behavior could be defined such that the UE does not actually need to switch UL frequency if the UE neither has data nor UCI to transmit on the corresponding carrier (for example, macrocell). However, since this information cannot conventionally be known at the RRM entity controlling the other carrier/cell (for example, at the small cell), thus UL performance degradation may be unavoidable.
United States patent application publication number US 2012/0044812 A1 relates to methods for performing change of primary cell during carrier aggregation operations.

### SUMMARY:

The present invention is defined by the appended independent claims. Certain more specific aspects are defined by the dependent claims.

Examples and technical descriptions of apparatuses, products and/or methods in the description and/or drawings which are not covered by the claims are presented not as embodiments of the invention but as background art or examples useful for understanding the invention.

### BRIEF DESCRIPTION OF THE DRAWINGS:

For proper understanding of the invention, reference should be made to the accompanying drawings, wherein:
Figure 1 illustrates an example scenario according to certain embodiments.
Figure 2 illustrates a flowchart of a method according to certain embodiments.
Figure 3 illustrates an example network cell according to certain embodiments.
Figure 4 illustrates a system according to certain embodiments.

### DETAILED DESCRIPTION:

Certain embodiments refer to inter-site carrier aggregation (CA), and more generally to macrocell-assisted local area access for small cell enhancements. In certain embodiments, the user equipment (UE) may simultaneously be connected to both macrocell and small cell. The UE could in one example be configured to receive at least control plane (C-plane) data from macrocell, while user plane (U-plane) data may be transmitted via either small cell only, or via both macro and small cell (e.g. inter-site CA). In the following description, macrocell and small cell are assumed to operate on separate carrier frequencies, although this is not mandatory for every embodiment.

In the following description it is assumed that inter-site CA with macrocell is the primary cell (PCell) and small cell is a secondary cell (SCell). However, the principles described herein may be generalized to any case with macrocell-assisted local area access with the UE simultaneously connected to both macrocell and small cell layer.

In certain embodiments, when a UE is configured with inter-site CA, a system may dynamically change the physical layer (PHY) configuration for the transmission of uplink control information (UCI) depending on whether downlink (DL) data is actually transmitted from macrocell (for example, PCell) only, small cell (for example, SCell) only, or simultaneously from both macro and small cell.

In certain embodiments, a random access procedure may be used to guarantee synchronized change of PHY configuration for the transmission of UCI at the UE, macrocell and small cell.

The PHY configuration for the transmission of UCI may be characterized, for example, by the timing between reception of Physical Downlink Control Channel/Physical Downlink Shared Channel (PDCCH/PDCSH) in DL and transmission of the corresponding Acknowledgement/Negative Acknowledgement (ACK/NACK) in Uplink (UL), by how PDCCH resources are mapped into the corresponding Physical Uplink Control Channel (PUCCH) resources, by the number of required Hybrid Automatic Repeat Request (HARQ) processes, and the like. For example, Frequency Division Duplexing (FDD) and Time Division Duplexing (TDD), as well as different UL/DL TDD configurations, are characterized by different PHY configurations for the transmission of UCI.

Therefore, in case of inter-site CA, the PHY configuration for the transmission of UCI may be strongly dependent on the configured macro-small cell UL switching pattern. For a correct functioning of the basic PHY procedures, such as HARQ, it may be useful that the transmitting and receiving entity (in this example the evolved Node B (eNB) and the UE, respectively) have at every time the same understanding of the PHY configuration which is being used for the transmission of UCI.

In order to be able to dynamically change the PHY configuration for the transmission of UCI, in some example embodiments, the UE in inter-site CA between a macrocell and a small cell may be configured with three UL PHY configurations for the transmission of UCI. The first configuration, PHY config#1, may be used when DL data is delivered from small cell only. The second configuration, PHY config#2, may be used when DL data is delivered via multiple transmission points, for example, simultaneously from both macro and small cell and assuming relaxed backhaul requirements, for example, independent L1/L2 RRM at each transmission point. The third configuration, PHY config#3, may be used when DL data is delivered from macrocell only.

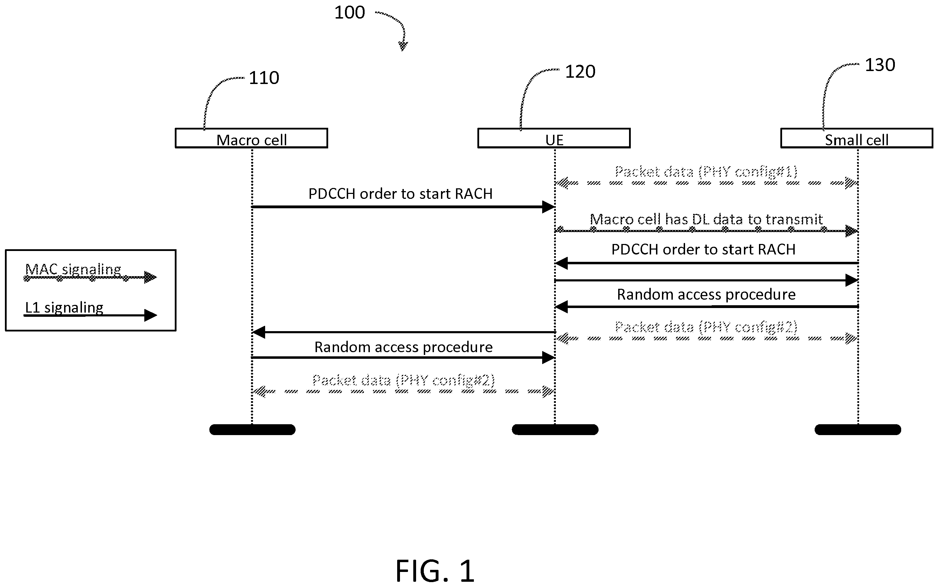

When, for example, both macrocell and small cell are operated in FDD mode, PHY config#1 and PHY config#3 might be the same, making it possible to only have two PHY configurations, as shown in Figure 1.

In order to enable synchronized switching of the used PHY configuration between UE, macrocell and small cell in some example embodiments, a method may use a random access procedure (see Fig. 1). A Random Access Channel (RACH) procedure may be used as a handshake procedure for PHY reconfiguration between one receiving and one transmitting entity, according to any desired technique. In certain embodiments, such a procedure may be extended to the case with two or more transmission points.

Another aspect of certain embodiments is the example case where UE always receives data from the small cell (SCell) and the small cell needs to be informed when data transmission from the macrocell (PCell) starts/ends (or vice versa), which will then trigger a change in the used PHY configuration for the transmission of UCI. Certain embodiments address different possibilities: explicit signaling from macrocell to small cell (for example, via X2) - potentially followed by PDCCH order of contention-less random access (using for example, DCI format 1A); implicit signaling from the UE to the small cell by using a specifically allocated RACH preamble for random access towards the small cell (non-contention based); and explicit signaling from UE using higher layer signaling (for example, MAC) and/or newly standardized message 3 during the random access procedure towards the small cell. These various approaches may be used in combination in certain embodiments.

In the case of explicit signaling from the UE using higher layer signaling, the UE may switch to new PHY configuration only after random access procedure on SCell or small cell; and in case the indication is that data transmission via PCell has ended, the RACH procedure on PCell or macrocell may be initiated after RACH procedure on SCell or small cell.

It is assumed that UE has UL connection towards the small cell and may therefore use already allocated UL resources for the transmission of the MAC control element indicating that data transmission via PCell has started/ended or at least the UE may have the possibility to signal an UL scheduling request to the small cell. RACH procedure on small cell may be needed after reception of the MAC control element indicating that DL data transmission via PCell has started/ended in order to guarantee synchronized PHY reconfiguration between UE and small cell.

Assuming the RACH procedure on PCell/macrocell is initiated after the RACH procedure on SCell/small cell, RACH resources on macro carrier may be configured during macro subframes of PHY config#2. Otherwise, the UE may not be able to transmit RACH on PCell while configured with PHY config#2.

Alternatively, the RACH procedure on PCell/macrocell could also be initiated before the RACH procedure on SCell/small cell. In this case the small cell eNB may have to cope with some uncertainty on which PHY configuration is in use at the UE at least until receiving the indication that DL data transmission via PCell has started.

Figure 1 illustrates an example scenario 100 according to certain embodiments. In Figure 1, it is assumed that the indication that DL data transmission via macrocell 110, which maybe PCell, has started and is signalled using PDCCH order, though the use of a MAC control element or other means for signalling is also a possibility as indicated and discussed below. In the latter case, since user equipment 120 (UE) is using PHY config#1 no HARQ feedback is available for the transmitted message e.g. MAC control element. Transmission of RACH preamble within a certain time window could be used at the macrocell eNB as ACK/NACK.

Next, in one possible implementation and assuming inter-site CA between macrocell 110, which may be PCell, and small cell 130, which may be SCell, the described techniques also apply in the case of macrocell-assisted local area access with UE 120 simultaneously connected to macrocell and small cell layer, for example, C-plane via macrocell and U-plane via small cell.

Similarly to the SCell 130 deactivation in Release 10/11, end of DL data transmission via PCell 110 may be deduced based on inactivity (for example, using an inactivity timer) and/or indicated via explicit higher layer signaling (for example, MAC signaling).

Upon receiving an indication that DL data transmission via PCell 110 has ended, the UE 120 may flush the HARQ buffers, start RACH procedure on SCell 130 (which may be a small cell), and switch from PHY config#2 to PHY config#1.

The small cell (or SCell) 130 maybe informed that DL data transmission via PCell 110 has ended using one of following mechanisms (or a combination thereof): via explicit message transmitted from macrocell (for example, via X2); implicitly by using a specifically assigned RACH preamble during the random access procedure on SCell 130; or via explicit signaling from the UE 120 using higher layer signaling (for example, MAC) and/or newly standardized message 3 after/during the random access procedure on SCell 130.

An indication to the UE 120 that DL data transmission via PCell 110 has started may happen via explicit higher layer signaling (similar to SCell 130 activation in Release 10) and/or PDCCH command to start RACH procedure on PCell 110 transmitted via macrocell (PCell) 110.

Upon receiving an indication that DL data transmission via PCell 110 has started, the UE 120 may flush the HARQ buffers, start RACH procedure on SCell 130, switch from PHY config#1 to PHY config#2, and start RACH procedure on PCell 110.

The small cell (SCell) 130 is informed that DL data transmission via PCell 110 has started using one of following mechanisms (or a combination of those): via explicit message transmitted from macrocell 110 (for example, via X2); implicitly by using a specifically assigned RACH preamble during the random access procedure on SCell 130; and via explicit signaling from the UE using higher layer signaling (for example, MAC) and/or newly standardized message 3 after/during the random access procedure on SCell 130.

In one embodiment, the same principles described above, apply to the case of SCell activation/deactivation in the context of inter-site CA.

After transmitting SCell activation message, the macrocell eNB may flush HARQ buffers and start using PHY config#2.

Upon receiving SCell activation message, the UE may flush HARQ buffers, switch from PHY config#1 to PHY config#2, and start RACH procedure on SCell 130. Optionally, after the UE flushes HARQ buffers, a start RACH procedure may be performed on PCell 110.

After transmitting SCell deactivation message, the macrocell eNB may flush HARQ buffers and start using PHY config#1.

Upon receiving SCell deactivation message, the UE may flush HARQ buffers, start RACH procedure on PCell 110, and start using PHY config#1.

In one embodiment, the same principles described above, apply to the case when an activation timer for the SCell expires.

In another embodiment, the same procedure described for SCell deactivation message is applied to the case of SCell deactivation by inactivity timer, see third generation partnership project (3GPP) technical specification (TS) 36.321, section 5.13, which is hereby incorporated herein by reference.

In yet another embodiment, the use of specific RACH preamble and/or explicit signaling from UE 120 using higher layer signaling (for example, MAC) and/or message 3 to signal to the small cell that DL data transmission via PCell 110 has started/ended (as discussed above) could also be used in case of SCell activation/deactivation.

Compared to always using the PHY configuration corresponding to data reception via multiple transmission points when the UE 120 is configured with inter-site CA, certain embodiments may present the following advantages: in the case where data is mainly delivered to the UE 120 in DL via one transmission point (for example, small cell) certain embodiments may allow small cell to also schedule UL resources during subframes that would otherwise be reserved for switching UL frequency and for UL transmission towards the macrocell. In other words, increased UL performance may result from certain embodiments.

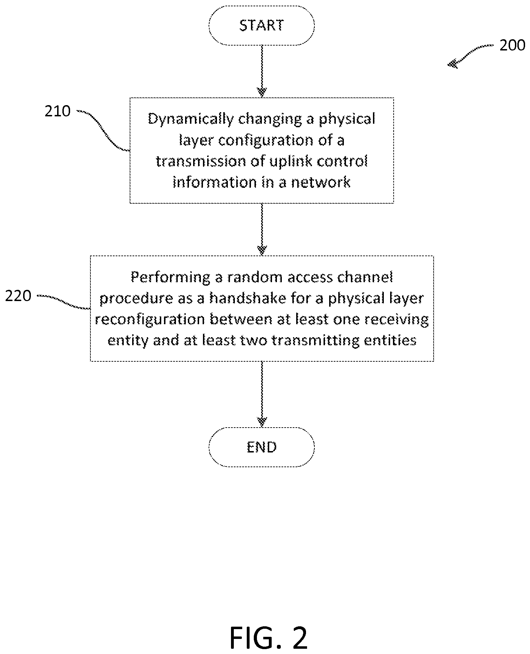

Figure 2 illustrates a flowchart of a method 200 according to certain embodiments. As shown in Figure 2, method 200 may include, at 210, dynamically changing a physical layer configuration of a transmission of uplink control information in a network.

The method may also include, at 220 which branches from 210, performing a random access channel procedure as a handshake for a physical layer reconfiguration between at least one receiving entity and at least two transmitting entities.

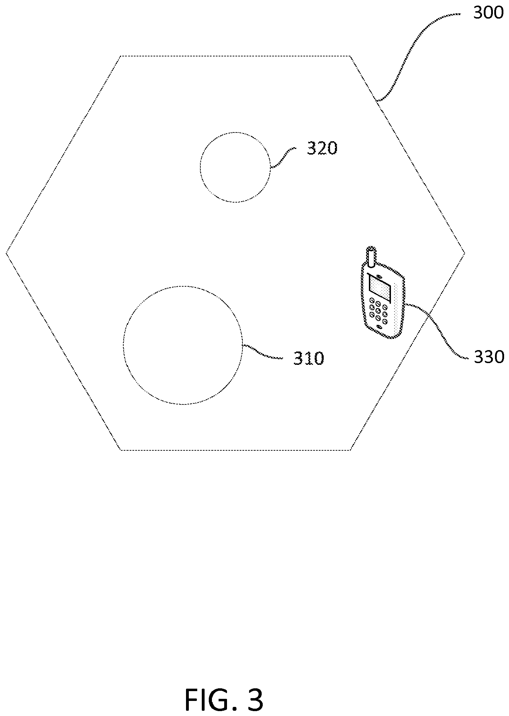

Figure 3 illustrates an example network cell according to certain embodiments. Figure 3 shows a network macrocell 300 including a picocell 310, a femtocell 320, and a user equipment 330. Macrocell 300 may be a cell in a mobile phone network that provides radio coverage served by a high power base station, such as, for example, a cell tower. Picocell 310 may be a small base station typically covering a small area, such as in-building (offices, train stations, shopping malls, libraries, etc.), or more recently in aircraft. Femtocell 320 may be a small, low-power base station, typically designed for use in a home or small business. A broader term which is more often used is small cell, with femtocells and picocells as subsets. User equipment 330 may be a mobile phone, personal digital assistant (PDA), e-reader, sensor, smart meter, peripheral or any communications device. The user equipment 330, picocell 310, or femtocell 320 may be a relay node.

In some embodiments macrocell 300 may include a plurality of picocells and/or femtocells as part of the network.

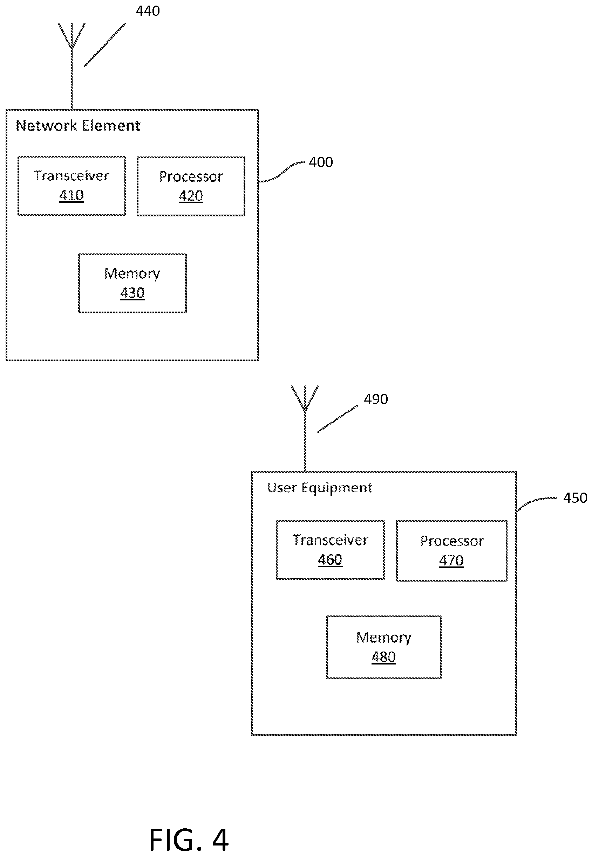

Figure 4 illustrates a system according to certain embodiments. In one embodiment, a system may include several devices, such as, for example, a network element 400 and user equipment 450. Network element 400 may correspond to network element 300, shown in Figure 3. The system may include more than one user equipment, although only one user equipment is shown for the purposes of illustration. The user equipment 450 may be a mobile telephone system and/or Voice over IP (VoIP) system. Alternatively, user equipment 450 may be a mobile phone, personal digital assistant (PDA), e-reader, sensor, smart meter, peripheral or any communications device.

Each of the devices in the system may include at least one processor, respectively indicated as 420 and 470. At least one memory may be provided in each device, and indicated as 430 and 480, respectively. The memory may include computer program instructions or computer code contained therein. One or more transceiver 410 and 460 may be provided, and each device may also include an antenna, respectively illustrated as 440 and 490. Although only one antenna each is shown, many antennas and multiple antenna elements may be provided to each of the devices. Other configurations of these devices, for example, may be provided. For example, network element 400 and user equipment may be additionally or solely configured for wired communication, and in such a case antennas 440 and 490 may illustrate any form of communication hardware, without being limited to merely an antenna.

Transceivers 410 and 460 may each, independently, be a transmitter, a receiver, or both a transmitter and a receiver, or a unit or device that may be configured both for transmission and reception.

Processors 420 and 470 may be embodied by any computational or data processing device, such as a central processing unit (CPU), application specific integrated circuit (ASIC), or comparable device. The processors may be implemented as a single controller, or a plurality of controllers or processors.

Memories 430 and 480 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and may be processed by the processors may be any suitable form of computer program code, for example, a compiled or interpreted computer program written in any suitable programming language.

The memory and the computer program instructions may be configured, with the processor for the particular device, to cause a hardware apparatus such as network element 400 and user equipment 450, to perform any of the processes described above (see, for example, Figs. 1 and 2). Therefore, in certain embodiments, a non-transitory computer-readable medium may be encoded with computer instructions that, when executed in hardware, may perform a process such as one of the processes described herein. Alternatively, certain embodiments of the invention may be performed entirely in hardware.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

### List of abbreviations:

- ACK: Acknowledgement
- CA: Carrier aggregation
- C-plane: Control plane
- CSI: Channel state information
- DCI: Downlink control information
- DL: Downlink
- eNB: Evolved Node-B
- HARQ: Hybrid automatic repeat request
- L1: Layer-1
- L2: Layer-2
- MAC: Medium access control
- NACK: Non-acknowledgement
- PCell: Primary cell
- PDCCH: Physical downlink control channel
- PUSCH: Physical uplink shared channel
- PHY: Physical layer
- RACH: Random access channel
- RAR: Random access response
- RRC: Radio network control
- RRH: Radio remote head
- RRM: Radio resource management
- SCell: Secondary cell
- TDM: Time domain multiplexing
- UCI: Uplink control information
- UE: User equipment
- UL: Uplink
- U-plane: User plane

## Claims

1. A user equipment configured to support transmission on one carrier frequency at a time (120, 110), comprising:
changing means for dynamically changing (210) a physical layer configuration of transmission of uplink control information in an inter-site carrier aggregation network system, wherein
when downlink data is delivered from both a macrocell and a small cell, the user equipment switches uplink frequency from the uplink frequency of the macrocell to an uplink frequency of the small cell, and vice versa, to transmit uplink control information;
when downlink data is delivered only from the small cell, the user equipment does not switch uplink frequency to an uplink frequency of the macrocell to transmit uplink control information; and
when downlink data is delivered only from the macrocell, the user equipment does not switch uplink frequency to an uplink frequency of the small cell to transmit uplink control information; and
applying means for applying the dynamic change of the physical layer configuration between the user equipment, at least one transmitting device configured to provide the macrocell, and at least one transmitting device configured to provide the small cell.

2. The user equipment of claim 1, further comprising means for performing random access channel procedures for physical layer reconfiguration between the user equipment and the at least two transmitting devices.

3. The user equipment of claim 2, wherein the random access channel procedure synchronizes the physical layer reconfiguration for transmission of the uplink control information at the user equipment, the macrocell layer and the small cell layer.

4. The user equipment of claim 3, wherein the performing random access channel procedures comprises:
performing a first random access channel procedure with a first transmitting device of the at least two transmitting devices; and
performing a second random access channel procedure with a second transmitting device of the at least two transmitting devices.

5. The user equipment of any of claims 1-4, wherein the dynamic change is triggered by a request from a first transmitting device of the at least two transmitting devices.

6. The user equipment of claim 5, further comprising
means for indicating to a second device of the at least two transmitting devices that the first transmitting device has data to transmit
or the first transmitting device no longer has data to transmit.

7. The user equipment of claim 6, wherein the dynamic changing is further triggered by a request from the second transmitting device in response to the indication that the first transmitting device has data to transmit or the first transmitting device no longer has data to transmit.

8. The user equipment of any of claims 1 - 7, wherein the user equipment is simultaneously connected to both a transmitting device of a macrocell layer and a transmitting device of a small cell layer of the network.

9. A system comprising: a user equipment according to any of claims 1 to 8;
a first transmitting device configured to provide a macrocell to the user equipment; and
a second transmitting device configured to provide a small cell to the user equipment.

10. A method for a user equipment (130) that is configured to support transmission on one carrier frequency at a time, the method comprising:
dynamically changing (210) a physical layer configuration of transmission of uplink control information in an inter- site carrier aggregation network system, wherein, when downlink data is delivered from both a macrocell and a small cell, the user equipment switches uplink frequency from the uplink frequency of the macrocell to an uplink frequency of the small cell, and vice versa, to transmit uplink control information;
when downlink data is delivered only from the small cell, the user equipment does not switch uplink frequency to an uplink frequency of the macrocell to transmit uplink control information; and
when downlink data is delivered only from the macrocell,
the user equipment does not switch uplink frequency to an uplink frequency of the small cell to transmit uplink control information; and
applying the dynamic change of the physical layer configuration between the user equipment, at least one transmitting device configured to provide the macrocell, and at least one transmitting device configured to provide the small cell.

11. The method of claim 10, wherein the dynamic changing is triggered by a request from a first transmitting device of the at least two transmitting devices.

12. The method of claim 11, further comprising:
indicating to a second device of the at least two transmitting devices that the first transmitting device has data to transmit or the first transmitting device no longer has data to transmit.

13. The method of claim 12, wherein the dynamic changing is further triggered by a request from the second transmitting device in response to the indication that the first transmitting device has data to transmit or the first transmitting device no longer has data to transmit.

## Patentansprüche

1. Benutzergerät (120, 110), das dafür ausgelegt ist, Übertragung auf einer Trägerfrequenz auf einmal zu unterstützen, umfassend:
Änderungsmittel zum dynamischen Ändern (210) einer Bitübertragungsschichtkonfiguration zur Übertragung von Aufwärtsstrecken-Steuerinformationen in einem Trägeraggregationsnetzsystem zwischen Standorten, wobei wenn Abwärtsstreckendaten sowohl von einer Makrozelle als auch einer Kleinzelle abgeliefert werden, das Benutzergerät Aufwärtsstreckenfrequenz von der Aufwärtsstreckenfrequenz der Makrozelle in eine Aufwärtsstreckenfrequenz der Kleinzelle umändert und umgekehrt, um Aufwärtsstrecken-Steuerinformationen zu übertragen;
wenn Abwärtsstreckendaten nur von der Kleinzelle abgeliefert werden, das Benutzergerät Aufwärtsstreckenfrequenz nicht in eine Aufwärtsstreckenfrequenz der Makrozelle umändert, um Aufwärtsstrecken-Steuerinformationen zu übertragen; und
wenn Abwärtsstreckendaten nur von der Makrozelle abgeliefert werden, das Benutzergerät Aufwärtsstreckenfrequenz nicht in eine Aufwärtsstreckenfrequenz der Kleinzelle umändert, um Aufwärtsstrecken-Steuerinformationen zu übertragen; und
Anwendemittel zum Anwenden der dynamischen Änderung der Bitübertragungsschichtkonfiguration zwischen dem Benutzergerät, mindestens einer zum Bereitstellen der Makrozelle ausgelegten Übertragungsvorrichtung und mindestens einer zum Bereitstellen der Kleinzelle ausgelegten Übertragungsvorrichtung.

2. Benutzergerät nach Anspruch 1, ferner umfassend:
Mittel zum Ausführen von Direktzugriffskanalprozeduren für Bitübertragungsschichtumkonfiguration zwischen dem Benutzergerät und den mindestens zwei Übertragungsvorrichtungen.

3. Benutzergerät nach Anspruch 2, wobei die Direktzugriffskanalprozedur die BitübertragungsschichtUmkonfiguration zur Übertragung der Aufwärtsstrecken-Steuerinformationen in dem Benutzergerät, der Makrozellenschicht und der Kleinzellenschicht synchronisiert.

4. Benutzergerät nach Anspruch 3, wobei das Ausführen von Direktzugriffskanalprozeduren Folgendes umfasst:
Ausführen einer ersten Direktzugriffskanalprozedur mit einer ersten Übertragungsvorrichtung der mindestens zwei Übertragungsvorrichtungen; und
Ausführen einer zweiten Direktzugriffskanalprozedur mit einer zweiten Übertragungsvorrichtung der mindestens zwei Übertragungsvorrichtungen.

5. Benutzergerät nach einem der Ansprüche 1-4, wobei die dynamische Änderung durch eine Anforderung von einer ersten Übertragungsvorrichtung der mindestens zwei Übertragungsvorrichtungen ausgelöst wird.

6. Benutzergerät nach Anspruch 5, ferner umfassend:
Mittel, um einer zweiten Vorrichtung der mindestens zwei Übertragungsvorrichtungen anzugeben, dass die erste Übertragungsvorrichtung Daten zu übertragen hat oder die erste Übertragungsvorrichtung nicht mehr Daten zu übertagen hat.

7. Benutzergerät nach Anspruch 6, wobei das dynamische Ändern ferner durch eine Anforderung von der zweiten Übertragungsvorrichtung als Reaktion auf die Angabe ausgelöst wird, dass die erste Übertragungsvorrichtung Daten zu übertragen hat oder die erste Übertragungsvorrichtung nicht mehr Daten zu übertragen hat.

8. Benutzergerät nach einem der Ansprüche 1-7, wobei das Benutzergerät gleichzeitig sowohl mit einer Übertragungsvorrichtung einer Makrozellenschicht als auch einer Übertragungsvorrichtung einer Kleinzellenschicht des Netzes verbunden ist.

9. System, umfassend: ein Benutzergerät nach einem der Ansprüche 1-8;
eine erste Übertragungsvorrichtung, die dafür ausgelegt ist, dem Benutzergerät eine Makrozelle bereitzustellen; und
eine zweite Übertragungsvorrichtung, die dafür ausgelegt ist, dem Benutzergerät eine Kleinzelle bereitzustellen.

10. Verfahren für ein Benutzergerät (130), das dafür ausgelegt ist, Übertragung auf einer Trägerfrequenz auf einmal zu unterstützen, wobei das Verfahren Folgendes umfasst:
dynamisches Ändern (210) einer Bitübertragungsschichtkonfiguration zur Übertragung von Aufwärtsstrecken-Steuerinformationen in einem Trägeraggregationsnetzsystem zwischen Standorten, wobei
wenn Abwärtsstreckendaten sowohl von einer Makrozelle als auch einer Kleinzelle abgeliefert werden, das Benutzergerät Aufwärtsstreckenfrequenz von der Aufwärtsstreckenfrequenz der Makrozelle in eine Aufwärtsstreckenfrequenz der Kleinzelle umändert und umgekehrt, um Aufwärtsstrecken-Steuerinformationen zu übertragen;
wenn Abwärtsstreckendaten nur von der Kleinzelle abgeliefert werden, das Benutzergerät Aufwärtsstreckenfrequenz nicht in eine Aufwärtsstreckenfrequenz der Makrozelle umändert, um Aufwärtsstrecken-Steuerinformationen zu übertragen; und
wenn Abwärtsstreckendaten nur von der Makrozelle abgeliefert werden, das Benutzergerät Aufwärtsstreckenfrequenz nicht in eine Aufwärtsstreckenfrequenz der Kleinzelle umändert, um Aufwärtsstrecken-Steuerinformationen zu übertragen; und
Anwenden der dynamischen Änderung der Bitübertragungsschichtkonfiguration zwischen dem Benutzergerät, mindestens einer zum Bereitstellen der Makrozelle ausgelegten Übertragungsvorrichtung und mindestens einer zum Bereitstellen der Kleinzelle ausgelegten Übertragungsvorrichtung.

11. Verfahren nach Anspruch 10, wobei die dynamische Änderung durch eine Anforderung von einer ersten Übertragungsvorrichtung der mindestens zwei Übertragungsvorrichtungen ausgelöst wird.

12. Verfahren nach Anspruch 11, ferner umfassend:
einer zweiten Vorrichtung der mindestens zwei Übertragungsvorrichtungen angeben, dass die erste Übertragungsvorrichtung Daten zu übertragen hat oder die erste Übertragungsvorrichtung nicht mehr Daten zu übertragen hat.

13. Verfahren nach Anspruch 12, wobei das dynamische Ändern ferner durch eine Anforderung von der zweiten Übertragungsvorrichtung als Reaktion auf die Angabe ausgelöst wird, dass die erste Übertragungsvorrichtung Daten zu übertragen hat oder die erste Übertragungsvorrichtung nicht mehr Daten zu übertragen hat.

## Revendications

1. Équipement utilisateur configuré pour prendre en charge une transmission sur une fréquence porteuse à un moment (120, 110) comprenant :
des moyens de changement pour changer de manière dynamique (210) une configuration de couche physique d'une transmission d'informations de commande de liaison montante dans un système de réseau d'agrégation de porteuses entre sites, dans lequel,
lorsque des données de liaison descendante sont délivrées à la fois depuis une macrocellule et une petite cellule, l'équipement utilisateur commute une fréquence de liaison montante de la fréquence de liaison montante de la macrocellule à une fréquence de liaison montante de la petite cellule, et vice versa, pour transmettre des informations de commande de liaison montante ;
lorsque des données de liaison descendante sont délivrées seulement depuis la petite cellule, l'équipement utilisateur ne commute pas une fréquence de liaison montante à une fréquence de liaison montante de la macrocellule pour transmettre des informations de commande de liaison montante ; et
lorsque des données de liaison descendante sont délivrées seulement depuis la macrocellule, l'équipement utilisateur ne commute pas une fréquence de liaison montante à une fréquence de liaison montante de la petite cellule pour transmettre des informations de commande de liaison montante ; et
des moyens d'application pour appliquer le changement dynamique de la configuration de couche physique entre l'équipement utilisateur, au moins un dispositif de transmission configuré pour fournir la macrocellule et au moins un dispositif de transmission configuré pour fournir la petite cellule.

2. Équipement utilisateur selon la revendication 1, comprenant en outre
des moyens pour effectuer des procédures de canal d'accès aléatoire pour une reconfiguration de couche physique entre l'équipement utilisateur et les deux, ou plus, dispositifs de transmission.

3. Équipement utilisateur selon la revendication 2, dans lequel la procédure de canal d'accès aléatoire synchronise la reconfiguration de couche physique pour une transmission des informations de commande de liaison montante au niveau de l'équipement utilisateur, la couche de macrocellule et la couche de petite cellule.

4. Équipement utilisateur selon la revendication 3, dans lequel la réalisation des procédures de canal d'accès aléatoire comprend :
la réalisation d'une première procédure de canal d'accès aléatoire avec un premier dispositif de transmission des deux, ou plus, dispositifs de transmission ; et
la réalisation d'une seconde procédure de canal d'accès aléatoire avec un second dispositif de transmission des deux, ou plus, dispositifs de transmission.

5. Équipement utilisateur selon l'une quelconque des revendications 1 à 4, dans lequel le changement dynamique est déclenché par une demande provenant d'un premier dispositif de transmission des deux, ou plus, dispositifs de transmission.

6. Équipement utilisateur selon la revendication 5, comprenant en outre
des moyens pour indiquer à un second dispositif des deux, ou plus, dispositifs de transmission que le premier dispositif de transmission possède des données à transmettre ou que le premier dispositif de transmission ne possède plus de données à transmettre.

7. Équipement utilisateur selon la revendication 6, dans lequel le changement dynamique est en outre déclenché par une demande provenant du second dispositif de transmission à la suite de l'indication que le premier dispositif de transmission possède des données à transmettre ou que le premier dispositif de transmission ne possède plus de données à transmettre.

8. Équipement utilisateur selon l'une quelconque des revendications 1 à 7, dans lequel l'équipement utilisateur est connecté en même temps à la fois à un dispositif de transmission d'une couche de macrocellule et à un dispositif de transmission d'une couche de petite cellule du réseau.

9. Système comprenant : un équipement utilisateur selon l'une quelconque des revendications 1 à 8 ;
un premier dispositif de transmission configuré pour fournir une macrocellule à l'équipement utilisateur ; et
un second dispositif de transmission configuré pour fournir une petite cellule à l'équipement utilisateur.

10. Procédé pour un équipement utilisateur (130) qui est configuré pour prendre en charge une transmission sur une fréquence porteuse à un moment, le procédé comprenant :
le changement dynamique (210) d'une configuration de couche physique d'une transmission d'informations de commande de liaison montante dans un système de réseau d'agrégation de porteuses entre sites, dans lequel,
lorsque des données de liaison descendante sont délivrées à la fois depuis une macrocellule et une petite cellule, l'équipement utilisateur commute une fréquence de liaison montante de la fréquence de liaison montante de la macrocellule à une fréquence de liaison montante de la petite cellule, et vice versa, pour transmettre des informations de commande de liaison montante ;
lorsque des données de liaison descendante sont délivrées seulement depuis la petite cellule, l'équipement utilisateur ne commute pas une fréquence de liaison montante à une fréquence de liaison montante de la macrocellule pour transmettre des informations de commande de liaison montante ; et
lorsque des données de liaison descendante sont délivrées seulement depuis la macrocellule, l'équipement utilisateur ne commute pas une fréquence de liaison montante à une fréquence de liaison montante de la petite cellule pour transmettre des informations de commande de liaison montante ; et
l'application du changement dynamique de la configuration de couche physique entre l'équipement utilisateur, au moins un dispositif de transmission configuré pour fournir la macrocellule et au moins un dispositif de transmission configuré pour fournir la petite cellule.

11. Procédé selon la revendication 10, dans lequel le changement dynamique est déclenché par une demande provenant d'un premier dispositif de transmission des deux, ou plus, dispositifs de transmission.

12. Procédé selon la revendication 11, comprenant en outre :
l'indication à un second dispositif des deux, ou plus, dispositifs de transmission que le premier dispositif de transmission possède des données à transmettre ou que le premier dispositif de transmission ne possède plus de données à transmettre.

13. Procédé selon la revendication 12, dans lequel le changement dynamique est en outre déclenché par une demande provenant du second dispositif de transmission à la suite de l'indication que le premier dispositif de transmission possède des données à transmettre ou que le premier dispositif de transmission ne possède plus de données à transmettre.
